# FASCICULE DE BREVET EUROPEEN

(11) **EP 0 844 134 B1**
(45) Date de publication et mention de la délivrance du brevet: **10.01.2001**
(21) Numéro de dépôt: 97402394.7
(22) Date de dépôt: 10.10.1997
(51) Int. Cl.: B60N 2/20

(54) **Dispositif d'actionnement d'un organe de commande d'un mécanisme de siège de véhicule automobile et siège muni d'un tel dispositif**
Betätigungsvorrichtung für ein Steuerungselement eines Fahrzeugsitzmechanismus und Sitz mit einer solchen Vorrichtung versehen
Actuating device for a controlling member of a vehicle seat mechanism and seat provided with such a device

(30) Priorité: 22.11.1996 FR 9614324
(43) Date de publication de la demande: 27.05.1998
(73) Titulaire: ECIA - EQUIPEMENTS ET COMPOSANTS POUR L'INDUSTRIE AUTOMOBILE, F-25400 Audincourt (FR)
(72) Inventeur: Fourrey, François, 45290 Nogent Sur Vernisson (FR)
(74) Mandataire: Burbaud, Eric

(56) Documents cités:
- EP-A- 0 024 976
- FR-A- 2 722 150
- US-A- 3 953 069
- US-A- 5 507 553
- US-A- 5 516 198

## Description

La présente invention concerne un dispositif d'actionnement d'un organe de commande d'un mécanisme de siège de véhicule automobile et un siège muni de ce dispositif.

Il est connu de FR-A-2 722 150, selon le préambule de la revendication 1, un siège pour véhicule automobile du type comprenant un dossier monté pivotant sur une assise au moyen d'un mécanisme formant une articulation commandée par un organe pouvant tourner, d'une part, dans un premier sens de réglage de l'inclinaison du dossier par rapport à l'assise ou de rabattement de ce dossier contre l'assise, et d'autre part, dans un second sens, opposé au premier, de basculement temporaire du dossier vers l'assise.

Dans le cas d'un siège avant de ce type, le basculement temporaire du dossier vers l'assise permet l'accès aux places arrière de ce véhicule.

Par ailleurs, on souhaite de plus en plus fréquemment pouvoir placer un siège dans différentes configurations d'utilisation, par exemple, une configuration en siège courant, adaptée notamment à la conduite, ou bien une configuration en tablette.

Cette dernière configuration peut être obtenue, dans le cas du siège du type précité, en actionnant l'organe de commande dans le premier sens de manière à rabattre le dossier contre l'assise pour le placer dans une position sensiblement horizontale.

L'organe de commande de l'articulation du siège du type précité est habituellement actionné par un levier. Ainsi, la manoeuvre de ce levier dans un premier sens permet le réglage de l'inclinaison du dossier par rapport à l'assise ou bien le rabattement de ce dossier contre l'assise. La manoeuvre du levier dans un second sens, opposé au premier, permet le basculement temporaire de ce dossier vers l'assise.

Par ailleurs, un siège avant de véhicule automobile est généralement relié au plancher du véhicule au moyen d'une paire de glissières de positionnement longitudinal de ce siège.

Certains sièges avant du type précité sont équipés de moyens de déverrouillage des glissières actionnés automatiquement sous l'effet du basculement temporaire du dossier vers l'assise pour permettre le déplacement du siège vers l'avant afin de faciliter l'accès aux places arrière.

Dans ce dernier cas, le levier d'actionnement doit être relativement long afin de minimiser l'effort exercé par l'utilisateur pour, d'une part, obtenir le déverrouillage des glissières, et d'autre part, faire basculer le dossier tout en déplaçant le siège vers l'avant.

Or, un levier d'actionnement relativement long est gênant lorsque le siège est dans sa configuration en tablette, du fait qu'il dépasse généralement au-dessus du plan général de cette tablette.

L'invention a notamment pour but d'actionner l'organe de commande de l'articulation au moyen d'un dispositif peu encombrant lorsque le siège est dans une configuration quelconque, ceci en minimisant l'effort que doit fournir l'utilisateur pour manoeuvrer ce dispositif d'actionnement.

A cet effet, l'invention a pour objet un dispositif d'actionnement d'un organe de commande d'un mécanisme de siège de véhicule automobile, l'organe de commande pouvant tourner dans deux sens opposés autour d'un axe de rotation, caractérisé en ce qu'il comprend deux leviers articulés entre eux autour d'un axe d'articulation sensiblement parallèle à l'axe de rotation de l'organe de commande,
un premier levier comportant une première extrémité couplée avec l'organe de commande et une seconde extrémité articulée sur le second levier,
le second levier comportant une première extrémité articulée sur le premier levier et une seconde extrémité libre,
le second levier étant déplaçable par rapport au premier levier entre deux positions d'assujettissement des leviers entre eux dans lesquelles les extrémités de couplage et libre des leviers sont respectivement rapprochées et éloignées entre elles.

Suivant d'autres caractéristiques de ce dispositif :
- les deux positions d'assujettissement des leviers entre eux sont définies par coopération du premier levier avec deux butées d'assujettissement solidaires du second levier et disposées respectivement aux deux extrémités d'un secteur angulaire centré sur l'axe d'articulation des leviers ;
- le secteur angulaire est délimité par un évidement ménagé dans le second levier, formant logement pour le premier levier, les butées d'assujettissement étant délimitées par un bord de l'évidement sensiblement parallèle à l'axe de rotation de l'organe de commande;
- le premier levier a une forme générale de tige coudée parallèlement à un plan sensiblement perpendiculaire à l'axe de rotation de l'organe de commande, de manière à présenter deux branches sensiblement rectilignes, la première branche s'étendant jusqu'à l'extrémité de couplage du premier levier, la seconde branche s'étendant jusqu'à l'extrémité d'articulation du premier levier sur le second levier, la seconde branche étant destinée à coopérer avec les butées d'assujettissement du second levier ;
- le secteur s'étend sensiblement sur 90° et le premier levier est coudé de manière que ses branches forment entre elles un angle d'environ 90°;
- le second levier est rappelé élastiquement vers sa position d'assujettissement au premier levier dans laquelle les extrémités de couplage et libre sont rapprochées entre elles ;
- lorsque les extrémités de couplage et libre des leviers sont rapprochées entre elles, l'extrémité de couplage du premier levier est sensiblement alignée avec les extrémités du second levier et est intercalée entre ces extrémités ;
- lorsque les extrémités de couplage et libre des leviers sont rapprochées entre elles, le second levier recouvre complètement le premier levier, et, lorsque les extrémités de couplage et libre des leviers sont éloignées entre elles, le second levier recouvre partiellement le premier levier ;
- le bord de l'évidement est interrompu pour former un passage traversé par le premier levier lorsque les extrémités de couplage et libre des leviers sont éloignées entre elles ;
- le second levier a une forme générale de bouton de contour sensiblement ovale dans un plan perpendiculaire à l'axe de rotation de l'organe de commande ;
- le second levier est délimité par deux surfaces opposées sensiblement perpendiculaires à l'axe de rotation de l'organe de commande, l'évidement formant logement étant ménagé sur une première surface, la seconde surface portant une aile, s'étendant sensiblement parallèlement à l'axe de rotation de l'organe de commande, pour la préhension du second levier ;
- l'aile de préhension a une forme générale en S dans un plan perpendiculaire à l'axe de rotation de l'organe de commande, de manière à présenter deux anses de préhension de courbures opposées.

L'invention a également pour objet un siège pour véhicule automobile comprenant un dossier monté pivotant sur une assise au moyen d'un mécanisme formant une articulation commandée par un organe pouvant tourner, d'une part, dans un premier sens de réglage de l'inclinaison du dossier par rapport à l'assise ou de rabattement de ce dossier contre l'assise, et d'autre part, dans un second sens, opposé au premier, de basculement temporaire de ce dossier vers l'assise, caractérisé en ce que l'organe de commande est actionné par un dispositif tel que défini ci-dessus.

L'invention sera mieux comprise à la lecture de la description qui va suivre donnée uniquement à titre d'exemple et faite en référence aux dessins dans lesquels:
- la figure 1 est une vue en perspective d'un siège pour véhicule automobile muni d'au moins un mécanisme formant une articulation commandée par un organe tournant actionné au moyen d'un dispositif selon l'invention;
- la figure 2 est une vue schématique de l'armature de l'assise du siège, à laquelle est relié le mécanisme formant articulation;
- la figure 3 est une vue à échelle agrandie du dispositif d'actionnement, selon la flèche 3 de la figure 4;
- la figure 4 est une vue suivant la flèche 4 de la figure 3;
- les figures 5 à 7 sont des vues suivant la flèche 5 de la figure 3, dans trois positions différentes du second levier de commande.

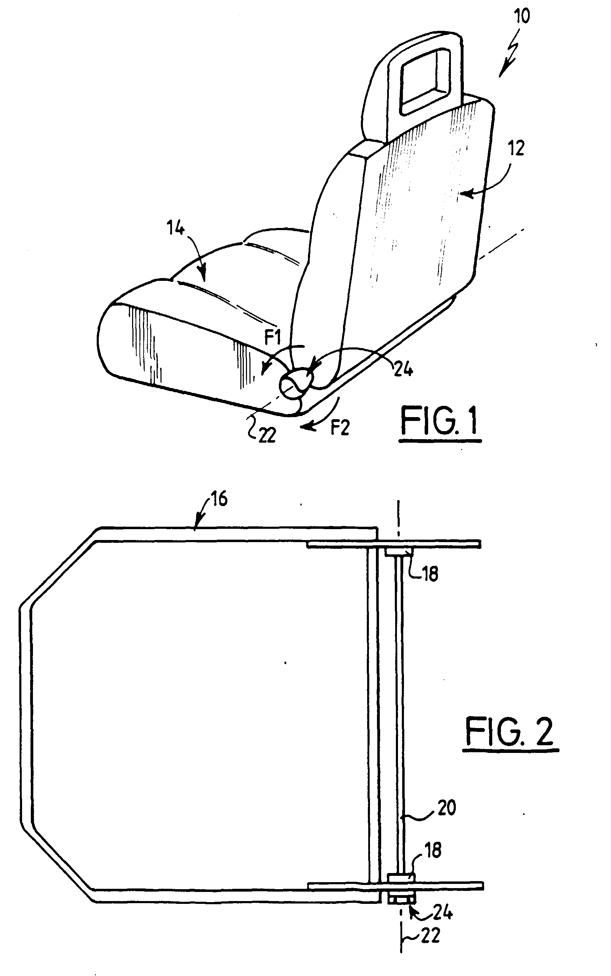

On a représenté sur la figure 1 un siège 10 pour véhicule automobile selon l'invention, par exemple un siège avant, comportant un dossier 12 et une assise 14.

On a représenté sur la figure 2 une armature 16 de l'assise 14, sensiblement horizontale.

Le dossier 12 est relié à l'assise 14 par deux mécanismes formant des articulations 18 schématisées sur la figure 2.

Ces articulations 18 sont reliées de façon connue en soi à l'assise 16 et sont couplées entre elles par une tringle 20.

Le dossier 12 peut pivoter par rapport à l'assise 14, autour d'un axe 22 matérialisé par les articulations 18.

Les articulations 18 sont classiques, par exemple du type décrit et illustré dans FR-A-2 722 150.

Chaque articulation 18 est munie d'un organe de commande, non représenté sur les figures, pouvant tourner dans deux sens opposés autour d'un axe de rotation qui coïncide avec l'axe 22 de pivotement du dossier et qui sera désigné dans ce qui suit par la même référence numérique.

Les organes de commande sont couplés entre eux par la tringle 20.

L'organe de commande de chaque articulation peut tourner, d'une part, dans un premier sens, indiqué par la flèche F1 sur les figures, pour le réglage de l'inclinaison du dossier 12 par rapport à l'assise 14 ou pour le rabattement de ce dossier 12 contre l'assise 14, et d'autre part, dans un second sens opposé au premier, indiqué par une flèche F2 sur les figures, de basculement temporaire de ce dossier vers l'assise.

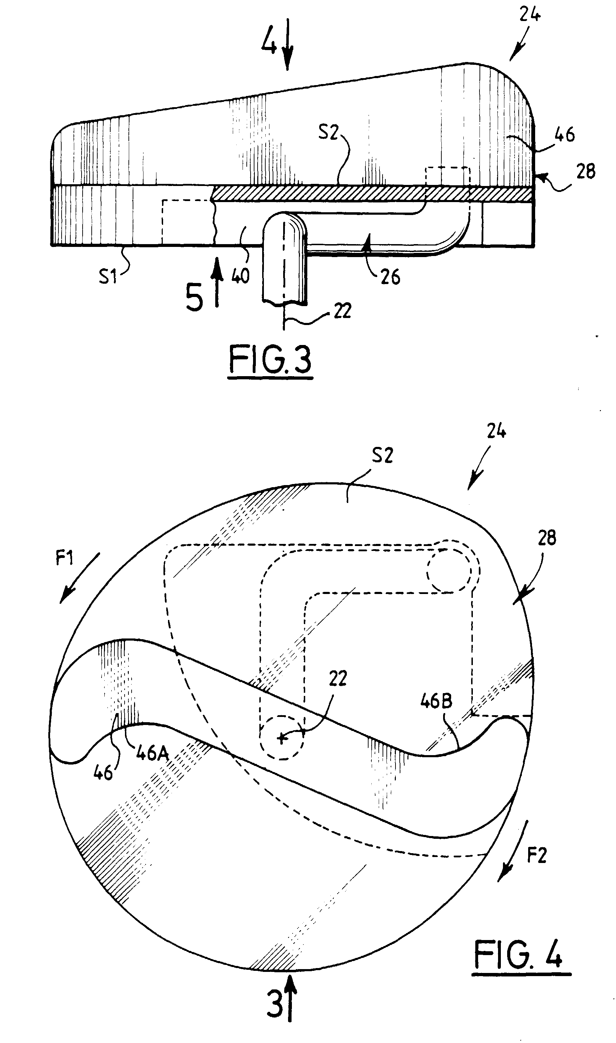

Les organes de commande sont actionnés par un dispositif 24 selon l'invention, commun aux deux articulations 18 et illustré en détail sur les figures 3 à 7.

Le dispositif d'actionnement 24 comprend deux leviers 26,28 articulés entre eux autour d'un axe d'articulation 30 sensiblement parallèle à l'axe de rotation 22.

Le premier levier 26, par exemple métallique, a une forme générale de tige pliée en manivelle.

Le second levier 28, par exemple en plastique, forme une poignée ayant l'aspect général d'un bouton de contour sensiblement ovale dans un plan perpendiculaire à l'axe de rotation 22.

Le premier levier 26 comporte une première extrémité 26A couplée avec l'organe de commande d'une des articulations 18, et une seconde extrémité 26B articulée sur le second levier 28.

Ce second levier 28 comporte une première extrémité 28A articulée sur la seconde extrémité 26B du premier levier 26, et une seconde extrémité libre 28B.

Le premier levier 26 a une forme générale coudée parallèlement à un plan sensiblement perpendiculaire à l'axe de rotation 22, de manière à présenter deux branches 32,34 sensiblement rectilignes.

Une première branche 32 s'étend jusqu'à l'extrémité de couplage 26A du premier levier 26. La seconde branche 34 s'étend jusqu'à l'extrémité 26B d'articulation du premier levier 26 sur le second levier 28.

Le second levier 28 est délimité par deux surfaces opposées S1,S2, sensiblement perpendiculaires à l'axe de rotation 22.

Une première surface S1 est généralement cachée aux yeux de l'utilisateur du dispositif 24, alors que la seconde surface S2 est généralement visible par cet utilisateur.

Le second levier 28 est déplaçable par rapport au premier levier 26 entre deux positions d'assujettissement des leviers entre eux, dans lesquels les extrémités de couplage 26A et libre 28B de ces leviers sont respectivement rapprochées et éloignées entre elles.

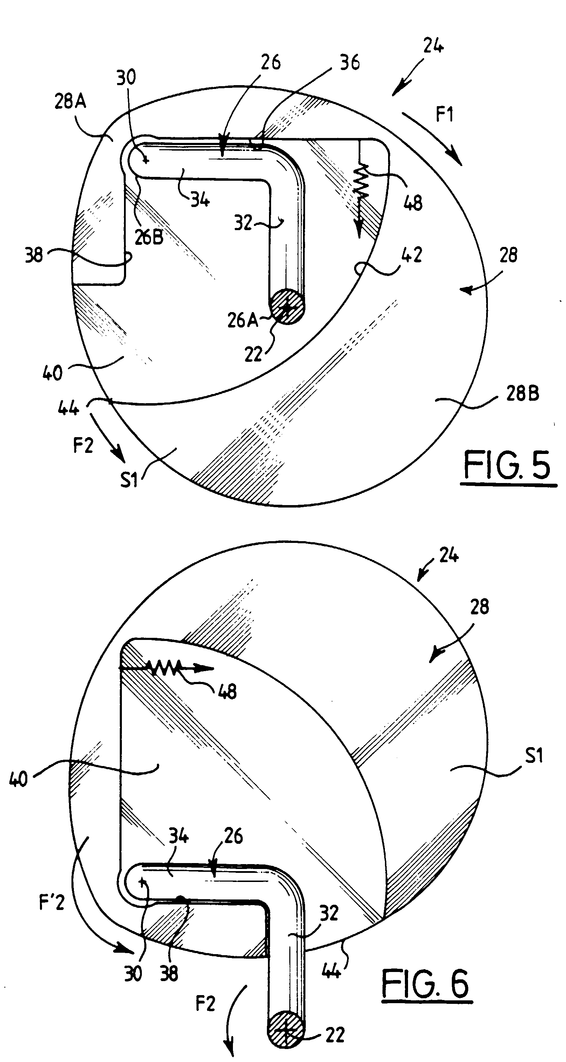

Sur la figure 5, on a représenté les leviers 26,28 dans une position relative dans laquelle les extrémités de couplage 26A et libre 28B de ces leviers sont rapprochées entre elles.

Sur les figures 6 à 7, on a représenté les leviers 26,28 dans une position relative dans laquelle les extrémités de couplage 26A et libre 28B de ces leviers sont éloignées entre elles.

Les deux positions d'assujettissement des leviers 26,28 entre eux sont définies par coopération de la seconde branche 34 du premier levier 26 avec deux butées d'assujettissement 36,38 solidaires du second levier 28.

Ces butées 36,38 sont disposées respectivement aux deux extrémités d'un secteur angulaire centré sur l'axe 30 d'articulation des leviers 26,28.

Ce secteur angulaire est délimité par un évidement 40 ménagé dans la surface cachée S1 du second levier 28.

Cet évidement 40 forme un logement pour le premier levier 26.

On notera que les butées d'assujettissement 36,38 sont délimitées par un bord 42 de l'évidement sensiblement parallèle à l'axe de rotation 22.

De préférence, le secteur angulaire s'étend sensiblement sur 90° et le premier levier 26 est coudé de manière que ces branches 32,34 forment entre elles un angle d'environ 90°.

Le bord 42 de l'évidement est interrompu pour former un passage 44 traversé par la première branche 32 du premier levier 26, lorsque les extrémités de couplage 26A et libre 28B des leviers sont éloignées entre elles.

Dans l'exemple illustré sur les figures, lorsque les extrémités de couplage 26A et libre 28B des leviers 26,28 sont rapprochées entre elles, l'extrémité de couplage 26A du premier levier est sensiblement alignée avec les extrémités 28A,28B du second levier et est intercalée entre ces extrémités 28A,28B.

Ainsi, dans cette position relative des extrémités de couplage 26A et libre 28B des leviers, le second levier 28 recouvre complètement le premier levier 26, de manière à le masquer aux yeux de l'utilisateur, comme cela est représenté notamment sur les figures 4 et 5.

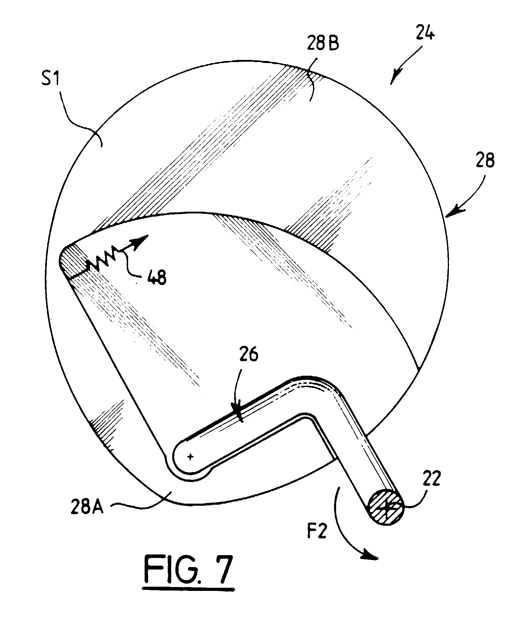

Par contre, lorsque les extrémités de couplage 26A et libre 28B des leviers sont éloignées entre elles, le second levier 28 recouvre partiellement le premier levier 26 comme cela est représenté sur les figures 6 et 7.

En se référant notamment aux figures 3 et 4, on voit que la surface visible S2 du second levier 28 porte une aile 46 s'étendant sensiblement parallèlement à l'axe de rotation 22, permettant la préhension du second levier 28.

L'aile 46 a une forme générale en S, dans un plan perpendiculaire à l'axe de rotation 22, de manière à présenter deux anses de préhension 46A,46B, de courbures opposées.

Le second levier 28 est rappelé élastiquement, au moyen d'un ressort 48 schématisé sur les figures 5 à 7, vers une position de rapprochement de son extrémité libre 28B avec l'extrémité de couplage 26A du premier levier 26.

On décrira ci-dessous le fonctionnement du siège 10 et plus particulièrement le fonctionnement du dispositif d'actionnement 24 selon l'invention, en se référant essentiellement aux figures 5 à 7.

Comme cela apparaîtra clairement par la suite, le second levier 28 peut être déplacé, d'une part, dans un premier sens de réglage de l'inclinaison du dossier 12 par rapport à l'assise ou de rabattement de ce dossier contre l'assise, et d'autre part, dans un second sens de basculement temporaire de ce dossier 12 vers l'assise 14.

Initialement, les deux leviers 26,28 sont au repos, comme cela est illustré sur la figure 5.

Le ressort 48 sollicite le second levier 28 de manière à appliquer la première butée d'assujettissement 36 contre la seconde branche 34 du premier levier 26.

Pour régler l'inclinaison du dossier 12 par rapport à l'assise 14, l'utilisateur saisit le second levier 28 de manière à le faire tourner dans le premier sens F1, autour de l'axe de rotation 22. Ce déplacement du second levier 28 a pour effet de maintenir la première butée d'assujettissement 36 et la seconde branche 34 du premier levier en contact entre elles si bien que les deux leviers 26,28 sont entraînés conjointement en rotation autour de l'axe 22.

Les organes de commande des articulations 18 sont alors entraînés en rotation dans le premier sens F1 pour permettre le réglage de l'inclinaison du dossier, de manière à placer ce dernier, soit dans une position normale d'utilisation du siège adaptée à la morphologie de l'utilisateur, soit dans une position sensiblement horizontale de rabattement contre l'assise pour former une tablette.

On notera que pour le réglage de l'inclinaison du dossier, l'utilisateur peut avantageusement saisir le second levier 28 à pleine main en répartissant les doigts sur toute la périphérie de ce second levier, si bien que le bras de levier de l'effort exercé par l'utilisateur par rapport à l'axe de rotation 22 est sensiblement égal au rayon moyen du second levier.

Pour faire basculer temporairement le dossier 12 vers l'assise 14, l'utilisateur saisit le second levier 28 de manière à le déplacer de façon générale dans le second sens F2, si bien que ce second levier 28 tourne autour de l'axe d'articulation 30, dans le sens F'2 indiqué sur la figure 6, par rapport au premier levier 26 qui reste fixe.

La seconde butée d'assujettissement 38 vient alors en appui contre la seconde branche 34 du premier levier 26, comme cela est représenté sur la figure 6. Dans cette position, la première branche 32 du premier levier 26 fait saillie, à travers le passage 44, à l'extérieur du logement 40.

La rotation du second levier 28 dans le sens F'2 se fait à l'encontre de la force élastique de rappel du ressort 48.

On notera qu'entre ses deux positions représentées aux figures 5 et 6 respectivement, le second levier 28 décrit une course morte par rapport au premier levier 26 qui n'a aucun effet sur les articulations 18.

La poursuite du déplacement du second levier 28 dans le second sens F2 a pour effet de maintenir la seconde butée d'assujettissement 38 et la seconde branche 34 du premier levier 26 en contact entre elles, si bien que les deux leviers 26,28 tournent conjointement dans le second sens F2 jusqu'à atteindre une position telle que représentée sur la figure 7.

Ce déplacement du premier levier 26 est transmis aux organes de commande des articulations 18 de manière à les faire tourner dans le second sens F2, ce qui permet à l'utilisateur de faire basculer temporairement le dossier 12 vers l'assise 14 et, s'il y a lieu, de déverrouiller les glissières auxquelles est relié le siège, afin de faciliter l'accès aux places arrière du véhicule.

Lorsque l'utilisateur relâche le second levier 28 depuis sa position illustrée à la figure 7, ce levier 28 est rappelé automatiquement par le ressort 48 dans une position de mise en contact de la première butée d'assujettissement 36 contre le second bras 34 du premier levier 26.

On notera que pour faire basculer temporairement le dossier 12 vers l'assise 14, l'utilisateur peut avantageusement saisir l'aile 46 du second levier 28 en plaçant au moins un de ses doigts dans une anse 46A,46B de cette aile.

L'effort exercé par l'utilisateur sur le second levier 28 est alors appliqué à proximité de l'extrémité libre 28B de ce second levier, si bien que le bras de levier de l'effort exercé par l'utilisateur par rapport à l'axe de rotation 22 est supérieur au rayon moyen du second levier.

Par conséquent, lorsque l'utilisateur exerce un effort sur le second levier 28, le bras du levier est plus important lorsque ce second levier est entraîné dans le sens F2 de basculement du dossier que dans le sens F1 de réglage de l'inclinaison du dossier ou de rabattement de ce dossier.

Le bras de levier étant plus important lorsque l'on actionne le second levier 28 dans le sens F2, l'utilisateur peut facilement faire basculer le dossier, et s'il y a lieu, déverrouiller les glissières et entraîner l'ensemble du siège vers l'avant, sans exercer d'effort excessif.

L'invention ne se limite pas au mode de réalisation décrit précédemment.

En effet, le premier levier 26 peut être réalisé autrement que sous la forme d'une tige coudée, par exemple en tôle découpée présentant des extrémités munies de broches d'articulation.

Par ailleurs, le dispositif d'actionnement selon l'invention peut être associé à un organe de commande d'un mécanisme de siège autre qu'une articulation de dossier, dans la mesure où cet organe de commande peut tourner dans deux sens opposés autour d'un axe de rotation.

L'invention comporte de nombreux avantages.

En particulier, le dispositif d'actionnement selon l'invention permet d'augmenter le bras de levier de l'effort exercé par l'utilisateur dans le sens d'actionnement de l'organe de commande qui oppose la résistance mécanique la plus importante, ceci afin de minimiser l'effort exercé par l'utilisateur pour actionner l'organe de commande dans ce sens.

Par ailleurs, dès que l'utilisateur relâche le second levier 28, celui-ci est rappelé automatiquement dans une position de recouvrement du premier levier, s'il ne l'était pas déjà, dans laquelle l'encombrement du dispositif d'actionnement est minimal.

## Revendications

1. Dispositif d'actionnement d'un organe de commande d'un mécanisme (18) de siège (10) de véhicule automobile, l'organe de commande pouvant tourner dans deux sens opposés (F1,F2) autour de l'axe de rotation (22) du pivotement du dossier (12), caractérisé en ce qu'il comprend deux leviers (26,28) articulés entre eux autour d'un axe d'articulation (30) sensiblement parallèle à l'axe de rotation (22) de l'organe de commande,
un premier levier (26) comportant une première extrémité (26A) couplée avec l'organe de commande et une seconde extrémité (26B) articulée sur le second levier (28),
le second levier (28) comportant une première extrémité (28A) articulée sur le premier levier (26) et une seconde extrémité libre (28B),
le second levier (28) étant déplaçable par rapport au premier levier (26) entre deux positions d'assujettissement des leviers entre eux dans lesquelles les extrémités de couplage (26A) et libre (28B) des leviers sont respectivement rapprochées et éloignées entre elles.

2. Dispositif selon la revendication 1, caractérisé en ce que les deux positions d'assujettissement des leviers (26,28) entre eux sont définies par coopération du premier levier (26) avec deux butées d'assujettissement (36,38) solidaires du second levier (28) et disposées respectivement aux deux extrémités d'un secteur angulaire centré sur l'axe d'articulation (30) des leviers (26,28).

3. Dispositif selon la revendication 2, caractérisé en ce que le secteur angulaire est délimité par un évidement (40) ménagé dans le second levier (28), formant logement pour le premier levier (26), les butées d'assujettissement (36,38) étant délimitées par un bord (42) de l'évidement sensiblement parallèle à l'axe de rotation (22) de l'organe de commande.

4. Dispositif selon la revendication 2 ou 3, caractérisé en ce que le premier levier (26) a une forme générale de tige coudée parallèlement à un plan sensiblement perpendiculaire à l'axe de rotation (22) de l'organe de commande, de manière à présenter deux branches (32,34) sensiblement rectilignes, la première branche (32) s'étendant jusqu'à l'extrémité de couplage (26A) du premier levier (26), la seconde branche (34) s'étendant jusqu'à l'extrémité (26B) d'articulation du premier levier (26) sur le second levier (28), la seconde branche (34) étant destinée à coopérer avec les butées d'assujettissement (36,38) du second levier (28).

5. Dispositif selon la revendication 4, caractérisé en ce que le secteur s'étend sensiblement sur 90° et le premier levier (26) est coudé de manière que ses branches (32,34) forment entre elles un angle d'environ 90°.

6. Dispositif selon l'une quelconque des revendications précédentes, caractérisé en ce que le second levier (28) est rappelé élastiquement vers sa position d'assujettissement au premier levier (26) dans laquelle les extrémités de couplage (26A) et libre (28B) sont rapprochées entre elles.

7. Dispositif selon l'une quelconque des revendications précédentes, caractérisé en ce que lorsque les extrémités de couplage (26) et libre (28B) des leviers (26,28) sont rapprochées entre elles, l'extrémité de couplage (26A) du premier levier est sensiblement alignée avec les extrémités (28A,28B) du second levier et est intercalée entre ces extrémités (28A,28B).

8. Dispositif selon l'une quelconque des revendications précédentes, caractérisé en ce que lorsque les extrémités de couplage (26A) et libre (28B) des leviers (26,28) sont rapprochées entre elles, le second levier (28) recouvre complètement le premier levier (26), et en ce que, lorsque les extrémités de couplage (26A) et libre (28B) des leviers (26,28) sont éloignées entre elles, le second levier (28) recouvre partiellement le premier levier (26).

9. Dispositif selon les revendications 3 et 8 prises ensemble, caractérisé en ce que le bord (42) de l'évidement (40) est interrompu pour former un passage (44) traversé par le premier levier (26) lorsque les extrémités de couplage (26A) et libre (28B) des leviers (26,28) sont éloignées entre elles.

10. Dispositif selon l'une quelconque des revendications précédentes, caractérisé en ce que le second levier (28) a une forme générale de bouton de contour sensiblement ovale dans un plan perpendiculaire à l'axe de rotation (22) de l'organe de commande.

11. Dispositif selon les revendications 3 et 10 prises ensemble, caractérisé en ce que le second levier (28) est délimité par deux surfaces (S1,S2) opposées sensiblement perpendiculaires à l'axe de rotation (22) de l'organe de commande, l'évidement (40) formant logement étant ménagé sur une première surface (S1), la seconde surface (S2) portant une aile (46), s'étendant sensiblement parallèlement à l'axe de rotation (22) de l'organe de commande, pour la préhension du second levier (28).

12. Dispositif selon la revendication 11, caractérisé en ce que l'aile de préhension (46) a une forme générale en S dans un plan perpendiculaire à l'axe de rotation (22) de l'organe de commande, de manière à présenter deux anses de préhension (46A,46B) de courbures opposées.

13. Siège pour véhicule automobile comprenant un dossier (12) monté pivotant sur une assise (14) au moyen d'un mécanisme formant une articulation (18) commandée par un organe pouvant tourner, d'une part, dans un premier sens de réglage de l'inclinaison du dossier (12) par rapport à l'assise (14) ou de rabattement de ce dossier (12) contre l'assise (14), et d'autre part, dans un second sens, opposé au premier, de basculement temporaire de ce dossier (12) vers l'assise (14), caractérisé en ce que l'organe de commande est actionné par un dispositif (24) selon l'une quelconque des revendications précédentes.

## Patentansprüche

1. Betätigungsvorrichtung eines Antriebsteils für einen Mechanismus (18) eines Fahrzeugsitzes (10), wobei das Antriebsteil in zwei entgegengesetzte Richtungen (F1, F2) um die Drehachse (22) der Schwenkung der Rückenlehne (12) drehen kann, dadurch gekennzeichnet, daß sie zwei Hebel (26, 28) aufweist, die um eine Gelenkachse (30) im wesentlichen parallel zur Drehachse (22) des Antriebsteils aneinander angelenkt sind,
wobei ein erster Hebel (26) ein mit dem Antriebsteil gekoppeltes, erstes Ende (26A) und ein zweites Ende (26B) aufweist, das an den zweiten Hebel (28) angelenkt ist,
wobei der zweite Hebel (28) ein erstes Ende (28A), das an den ersten Hebel (26) angelenkt ist, und ein zweites, freies Ende (28B) aufweist,
wobei der zweite Hebel (28) in Bezug auf den ersten Hebel (26) zwischen zwei Stellungen der Befestigung der Hebel aneinander beweglich ist, in denen das Koppelende (26A) und das freie Ende (28B) der Hebel jeweils einander angenähert bzw. voneinander entfernt sind.

2. Vorrichtung nach Anspruch 1, dadurch gekennzeichnet, daß die beiden Stellungen der Befestigung der Hebel (26, 28) aneinander durch die Zusammenwirkung des ersten Hebels (26) mit zwei Befestigungsanschlägen (36, 38) definiert werden, die fest mit dem zweiten Hebel (28) verbunden sind und sich je an an einem der beiden Enden eines Winkelsektors befinden, der auf die Gelenkachse (30) der Hebel (26, 28) zentriert ist.

3. Vorrichtung nach Anspruch 2, dadurch gekennzeichnet, daß der Winkelsektor von einer im zweiten Hebel (28) ausgebildeten Aussparung (40) begrenzt wird, die einen Sitz für den ersten Hebel (26) bildet, wobei die Befestigungsanschläge (36, 38) von einem Rand (42) der Aussparung begrenzt werden, der im wesentlichen parallel zur Drehachse (22) des Antriebsteils liegt.

4. Vorrichtung nach Anspruch 2 oder 3, dadurch gekennzeichnet, daß der erste Hebel (26) allgemein die Form einer Stange hat, die parallel zu einer im wesentlichen zur Drehachse (22) des Antriebsteils senkrechten Ebene gekrümmt ist, um zwei im wesentlichen geradlinige Arme (32, 34) zu bilden, wobei der erste Arm (32) sich bis zum Koppelende (26A) des ersten Hebels (26) erstreckt, der zweite Arm (34) sich bis zum Ende (26B) der Anlenkung des ersten Hebels (26) am zweiten Hebel (28) erstreckt und wobei der zweite Arm (34) dazu bestimmt ist, mit den Befestigungsanschlägen (36, 38) des zweiten Hebels (28) zusammenzuwirken.

5. Vorrichtung nach Anspruch 4, dadurch gekennzeichnet, daß der Sektor sich im wesentlichen über 90° erstreckt und der erste Hebel (26) so gekrümmt ist, daß seine Arme (32, 34) miteinander einen Winkel von etwa 90° bilden.

6. Vorrichtung nach einem der vorhergehenden Ansprüche, dadurch gekennzeichnet, daß der zweite Hebel (28) elastisch in seine Stellung der Befestigung am ersten Hebel (26) zurückgeholt wird, in der das Koppelende (26A) und das freie Ende (28B) einander angenähert sind.

7. Vorrichtung nach einem der vorhergehenden Ansprüche, dadurch gekennzeichnet, daß, wenn das Koppelende (26A) und das freie Ende (28B) der Hebel (26, 28) einander angenähert sind, das Koppelende (26A) des ersten Hebels im wesentlichen mit dem Enden (28A, 28B) des zweiten Hebels fluchtet und zwischen diese Enden (28A, 28B) eingefügt ist.

8. Vorrichtung nach einem der vorhergehenden Ansprüche, dadurch gekennzeichnet, daß, wenn das Koppelende (26A) und das freie Ende (28B) der Hebel einander angenähert sind, der zweite Hebel (28) den ersten Hebel (26) vollständig bedeckt, und daß, wenn das Koppelende (26A) und das freie Ende (28B) der Hebel (26, 28) voneinander entfernt sind, der zweite Hebel (28) den ersten Hebel (26) teilweise überdeckt.

9. Vorrichtung nach den Ansprüchen 3 und 8 zusammen gesehen, dadurch gekennzeichnet, daß der Rand (42) der Aussparung (40) unterbrochen ist, um einen Durchlaß (44) zu bilden, der vom ersten Hebel (26) durchquert wird, wenn das Koppelende (26A) und das freie Ende (28B) der Hebel (26, 28) voneinander entfernt sind.

10. Vorrichtung nach einem der vorhergehenden Ansprüche, dadurch gekennzeichnet, daß der zweite Hebel (28) die allgemeine Form eines Knopfes mit einem in einer Ebene senkrecht zur Drehachse (22) des Antriebsteils im wesentlichen ovalen Umriß hat.

11. Vorrichtung nach den Ansprüchen 3 und 10 zusammen gesehen, dadurch gekennzeichnet, daß der zweite Hebel (28) von zwei gegenüberliegenden Flächen (S1, S2) gebildet wird, die im wesentlichen senkrecht zur Drehachse (22) des Antriebsteils liegen, wobei die einen Sitz bildende Aussparung (40) in einer ersten Fläche (S1) ausgebildet ist, während die zweite Fläche (S2) einen Flügel (46) zum Ergreifen des zweiten Hebels (28) aufweist, der sich im wesentlichen parallel zur Drehachse (22) des Antriebsteils erstreckt.

12. Vorrichtung nach Anspruch 11, dadurch gekennzeichnet, daß der Greifflügel (46) allgemein eine S-Form in einer Ebene senkrecht zur Drehachse (22) des Antriebsteils hat, so daß er zwei Greifbügel (46A, 46B) mit entgegengesetzten Krümmungen besitzt.

13. Fahrzeugsitz mit einer Rückenlehne (12), die mittels eines Mechanismus schwenkbar an einer Sitzfläche (14) angebracht ist, der ein Gelenk (18) bildet, das von einem Antriebsteil gesteuert wird, welches einerseits in einer ersten Richtung der Einstellung der Neigung der Rückenlehne (12) in Bezug auf die Sitzfläche (14) oder des Umklappens dieser Rückenlehne (12) gegen die Sitzfläche (14) und andererseits in einer zweiten, der ersten entgegengesetzten Richtung des kurzzeitigen Kippens dieser Rückenlehne (12) zur Sitzfläche (14) drehen kann, dadurch gekennzeichnet, daß das Antriebsteil von einer Vorrichtung (24) nach einem der vorhergehenden Ansprüche betätigt wird.

## Claims

1. A device for actuating a control member of a mechanism (18) for a motor vehicle seat (10), the control member being rotatable in two opposing directions (F1, F2) about the rotation axis (22) for pivoting the seat back (12), characterised in that it comprises two levers (26, 28) mutually articulated about an articulation axis (30) substantially parallel to the rotation axis (22) of the control member,
a first lever (26) comprising a first end (26A) connected to the control member, and a second end (26B) articulated on the second lever (28),
the second lever (28) comprising a first end (28A) articulated on the first lever (26), and a second, free end (28B),
the second lever (28) being displaceable relative to the first lever (26) between two mutual securing positions of the levers in which the connected (26A) and free (28B) ends of the levers are respectively brought together and moved apart.

2. A device according to claim 1, characterised in that the two mutual securing positions of the levers (26, 28) are defined by cooperation of the first lever (26) with two securing stops (36, 38) integral with the second lever (28) and arranged at either end of an angular segment centered on the articulation axis (30) of the levers (26, 28).

3. A device according to claim 2, characterised in that the angular segment is delimited by a recess (40) provided in the second lever (28) and forming a housing for the first lever (26), the securing stops (36, 38) being delimited by an edge (42) of the recess substantially parallel to the rotation axis (22) of the control member.

4. A device according to claim 2 or 3, characterised in that the first lever (26) is in the general shape of a rod bent parallel to a plane, substantially perpendicular to the rotation axis (22) of the control member, so as to have two substantially rectilinear arms (32, 34), the first arm (32) extending as far as the connected end (26A) of the first lever (26), the second arm (34) extending as far as the end (26B) articulating the first lever (26) on the second lever (28), the second arm (34) being intended to co-operate with the securing stops (36, 38) of the second lever (28).

5. A device according to claim 4, characterised in that the segment extends substantially through 90°, and the first lever (26) is bent so that its arms (32, 34) form an angle of approximately 90°.

6. A device according to any one of the preceding claims, characterised in that the second lever (28) is resiliently returned to its securing position with the first lever (26) in which the connected (26A) and free (28B) ends are brought together.

7. A device according to any one of the preceding claims, characterised in that, when the connected (26A) and free (28B) ends of the levers (26, 28) are brought together, the connected end (26A) of the first lever is substantially aligned with the ends (28A, 28B) of the second lever and is interposed between these ends (28A, 28B).

8. A device according to any one of the preceding claims, characterised in that, when the connected (26A) and free (28B) ends of the levers (26, 28) are brought together, the second lever (28) completely covers the first lever (26), and in that, when the connected (26A) and free (28B) ends of the levers (26, 28) are moved apart, the second lever (28) partially covers the first lever (26).

9. A device according to claims 3 and 8 together, characterised in that the edge (42) of the recess (40) is interrupted to form a passage (44) through which the first lever (26) extends when the connected (26A) and free (28B) ends of the levers (26, 28) are moved apart.

10. A device according to any one of the preceding claims, characterised in that the second lever (28) is in the general shape of a button with a substantially oval contour in a plane perpendicular to the rotation axis (22) of the control member.

11. A device according to claims 3 and 10 together, characterised in that the second lever (28) is delimited by two opposing surfaces (S1, S2) substantially perpendicular to the rotation axis (22) of the control member, the recess (40) forming a housing being provided in a first surface (S1), the second surface (S2) carrying a wing (46) extending substantially parallel to the rotation axis (22) of the control lever and provided for gripping the second lever (28).

12. A device according to claim 11, characterised in that the gripping wing (46) is in the general shape of an S in a plane perpendicular to the rotation axis (22) of the control member and thus has two gripping handles (46A, 46B) curving in opposite directions.

13. A seat for a motor vehicle, comprising a seat back (12) pivotably mounted on a seating surface (14) by means of a mechanism forming an articulation (18) controlled by a member rotatable in a first direction for adjusting the inclination of the seat back (12) relative to the seating surface (14) or for lowering this seat back (12) against the seating surface (14), and in a second direction, contrary to the first direction, for temporarily pivoting this seat back (12) towards the seating surface (14), characterised in that the control member is actuated by a device (24) according to any one of the preceding claims.
